# EUROPÄISCHE PATENTSCHRIFT

(11) **EP 2 697 141 B1**
(45) Veröffentlichungstag und Bekanntmachung des Hinweises auf die Patenterteilung: **03.03.2021**
(21) Anmeldenummer: 12715064.7
(22) Anmeldetag: 10.04.2012
(51) Int. Cl.: B65G 25/02, A23G 1/26, F16C 29/02

(54) **TRANSPORTVORRICHTUNG**
TRANSPORTING APPARATUS
DISPOSITIF DE TRANSPORT

(30) Priorität: 12.04.2011 DE 102011007233
(43) Veröffentlichungstag der Anmeldung: 19.02.2014
(73) Patentinhaber: Winkler und Dünnebier Süsswarenmaschinen GmbH, 56579 Rengsdorf (DE)
(72) Erfinder: RUNKEL, Rainer, 56579 Rengsdorf (DE); DAUMANN, Jörg, 51588 Nümbrecht (DE); WELTER, Michael, 53426 Königsfeld (DE)
(74) Vertreter: Lippert Stachow Patentanwälte Rechtsanwälte
(86) Internationale Anmeldenummer: PCT/EP2012/056454
(87) Internationale Veröffentlichungsnummer: WO 2012/140014

(56) Entgegenhaltungen:
- EP-A1- 0 381 780
- EP-A1- 1 535 867
- WO-A1-03/070420
- DE-A1-102006 018 312
- DE-A1-102006 062 295
- DE-A1-102008 022 191
- DE-U1- 20 110 837
- DE-U1- 29 820 564
- US-A- 3 939 992
- US-A- 4 417 771
- US-A1- 2004 112 714
- US-A1- 2011 041 706
- US-A1- 2011 045 155

## Beschreibung

Die Erfindung betrifft eine Transportvorrichtung für einen abschnittsweisen Transport von Formen einer Süßwarenproduktionsanlage entlang einer Transportstrecke, umfassend je einen angetriebenen ersten Mitnehmer für jeden der Transportabschnitte der Transportstrecke, wobei wenigstens ein Stellmittel vorgesehen ist, so dass jeder erste Mitnehmer senkrecht zur Transportrichtung der Form hin und her stellbar ist zwischen einer Mitnahmeposition, in welcher dieser eine Form hintergreift und einer Ausstellposition, in welcher dieser die Form passieren kann.

Eine Transportvorrichtung ist aus der DE 298 20 564 U1 bekannt. Zum Weitertransport werden die Formen von ersten Mitnehmern hintergriffen. Die ersten Mitnehmer sind um eine Drehachse schwenkbar, um sie von der Mitnahmeposition umzustellen in die seitlich ausgestellte Position und umgekehrt. Die ersten Mitnehmer können beidseitig der Transportstrecke beziehungsweise beidseitig des jeweiligen Transportabschnitts vorgesehen sein.

Zum Antrieb der ersten Mitnehmer in Transportrichtung der Süßwarenproduktionsanlage, dass heißt, zum Vorschub beziehungsweise zum Weitertransport einer Form, sind die Mitnehmer an einer Stange angeordnet, die in Gleitlagern geführt und innerhalb des Transportabschnitts reversibel angetrieben ist. Dabei soll zum Antrieb dieses Weitertransports beispielsweise eine hydraulische Zylinder-Kolben-Einheit vorgesehen sein, welche den Mitnehmer innerhalb des Transportabschnitts reversibel bewegt. Wenn die Form um die Länge eines Transportabschnitts weitertransportiert worden ist, wird der Mitnehmer in seine Ausstellposition umgestellt und vom Ende des Transportabschnitts zum Anfang des Transportabschnitts zurück bewegt. In dieser Zeit steht die Form still. Falls eine kurze Stillstandszeit gewünscht ist, muss die Bewegung des Mitnehmers zurück zum Anfang des Transportabschnitts in kürzerer Zeit durchgeführt werden, als die Transportbewegung in der Gegenrichtung. Eine schnellere Rückwärtsbewegung geht mit erhöhten Beschleunigungs- und Verzögerungswerten einher. Antriebsbauteile, wie die Zylinder-Kolben-Einheit, etc. unterliegen einer erhöhten Beanspruchung. Durch Verschleiß entstehen Ungenauigkeiten im Transportweg. In einer Süßwarenproduktionsanlage werden zum Beispiel stationäre Gießstationen oder formgebende Bearbeitungsstationen eingesetzt, die einer gewissen Regelmäßigkeit der Transportbewegung bedürfen, damit z.B. eine stationäre Gießstation Süßwarenmasse in eine Form dosieren kann und die Süßwarenmasse nicht neben die Form dosiert wird, weil der Transportweg zu stark variiert. Verschleiß und derlei Positionierungenauigkeiten machen Wartungsarbeiten erforderlich.

Außer der bekannten Transportvorrichtung, bei der innerhalb von einzelnen Transportabschnitten Mitnehmer wirken, die dem jeweiligen Transportabschnitt zugeordnet sind, ist es allgemein bekannt, Transportketten zu verwenden. Mit Transportketten ist ein kontinuierlicher Transport von Formen einer Süßwarenproduktionsanlage entlang einer Transportstrecke zu bewerkstelligen. Diese Kettenantriebe unterliegen gemäß der DE 298 20 564 U1 jedoch ebenfalls einem erhöhten Verschleiß, den es mit der im genannten Stand der Technik vorgeschlagenen Lehre zu verbessern galt.

Eine andere Transportvorrichtung ist aus US 2011/0041706 A1 bekannt. Diese schlägt eine Transportvorrichtung vor, deren Mitnehmer nach oben gerichtet an Schubstangen angebracht sind. Die Schubstangen werden über eine Wippe auf und ab bewegt. Die zu transportierende Form liegt im Betrieb horizontal auf der Transportvorrichtung auf, respektive auf Tragschienen der Transportvorrichtung. Die Mitnehmer sind mit den Schubstangen aufwärts und abwärts bewegbar angeordnet.

Bei der Aufwärtsrichtung gelangen die Mitnehmer in Reibkontakt mit der Außenfläche der Form, die dabei angehoben und wieder herabfallen kann, was Erschütterungen der Form verursacht und die Qualität der zu erzeugenden Süßwarenartikel beeinträchtigt.

Auf dem Gebiet der automatischen Fertigung ist aus WO 03/070420 A1 eine Transportvorrichtung als Zuführvorrichtung zum Zuführen von Werkstückträgern bekannt. Die Werkstückträger werden längs eines Gurtförderers zu einer Bearbeitungsstation zugeführt, die mit einem gesteuert angetriebenen Transporteur, der den Werkstückträger in einer der Bearbeitungsstation vorgeordneten Übernahmestation untergreift und von dem Gurtförderer abhebt und ihn in angehobenem Zustand in die Bearbeitungsstation transportiert und dort während der Werkstückbearbeitung abstützt.

Des Weiteren ist auf einem anderen technischen Gebiet die EP 1 535 867 A1 bekannt, welche die meisten gemeinsamen Merkmale mit dem Anspruch 1 offenbart, nämlich:
Transportvorrichtung für einen abschnittsweisen Transport von Formen entlang einer Transportstrecke, umfassend je einen angetriebenen ersten Mitnehmer für jeden der Transportabschnitte der Transportstrecke, wobei wenigstens ein Stellmittel vorgesehen ist, so dass jeder erste Mitnehmer senkrecht zur Transportrichtung der Form hin und her stellbar ist zwischen einer Mitnahmeposition, in welcher dieser eine Form hintergreift und einer Ausstellposition, in welcher dieser die Form passieren kann, wobei der erste Mitnehmer parallel zur Ebene der auf der Transportvorrichtung liegenden Form sowie senkrecht zur Transportrichtung der Form translatorisch bewegbar ist.

Der Erfindung liegt die Aufgabe zugrunde, eine verbesserte Transportvorrichtung für Formen einer Süßwarenproduktionsanlage anzugeben, welche die Ruckgefahr mindert und einem sanften und ruckfreien Weitertransport der Form begünstigt.

Erfindungsgemäß wird die Aufgabe durch die Merkmale des Anspruchs 1 gelöst.

Zumindest für einen Teil der Transportabschnitte der Transportstrecke kann je ein zweiter Mitnehmer vorgesehen sein, der ebenfalls zwischen einer Mitnahmeposition und einer Ausstellposition hin und her stellbar ist, wobei der erste Mitnehmer und der zweite Mitnehmer so aufeinander abgestimmt sind, dass der erste Mitnehmer in seiner Mitnahmeposition vom Anfang bis zum Ende des betreffenden Transportabschnitts vorwärtsbewegbar ist, und gleichzeitig der zweite Mitnehmer seine Ausstellposition einnehmend vom Ende dieses Transportabschnitts zurück zu dessen Anfang bewegbar ist.

Wenn der erste Mitnehmer das Ende des Transportabschnitts erreicht und eine Form weitertransportiert hat, ist der zweite Mitnehmer zurück zum Anfang des Transportabschnitts gelangt. Der zweite Mitnehmer kann dann von seiner ausgestellten Position umgestellt werden in seine Mitnahmeposition, in der er die nächstfolgende Form hintergreift und er kann diese ohne nennenswerte Unterbrechung entlang der Transportstrecke weitertransportieren. Während der zweite Mitnehmer die nächstfolgende Form weitertransportiert, ist der erste Mitnehmer in seiner ausgestellten Position, in der er zurück zum Anfang des Transportabschnitts bewegt werden kann, ohne der gleichzeitig in Transportrichtung weitertransportierten Form im Weg zu sein.

Mit dem Begriff "Transportrichtung" ist stets die Richtung gemeint, in der eine Form durch eine Süßwarenproduktionsanlage gefördert wird.

Die vorgeschlagene Transportvorrichtung weist eine verbesserte Verschleißfestigkeit auf, weil keine erhöhten Beschleunigungs- und Verzögerungswerte benötigt werden und die Antriebsbauteile während der Bewegung des jeweiligen Mitnehmers zurück zum Anfang eines Transportabschnitts keiner höheren Beanspruchung unterworfen werden müssen, wie in der umgekehrten Bewegungsrichtung für den Weitertransport einer Form.

Darüber hinaus kann die Anzahl der Formen gesteigert werden, die pro Zeiteinheit transportierbar ist. Dies, weil die gemäß dem Stand der Technik benötigte Stillstandszeit mit der neuen Transportvorrichtung reduziert werden kann.

Der erste Mitnehmer und der zweite Mitnehmer können so gestaltet sein, dass zwecks Umstellung von der jeweiligen Mitnahmeposition in die jeweilige Ausstellposition einander entgegengesetzte Stellbewegungen vorgesehen sind. Diese Gestaltung ist aus Platzgründen vorteilhaft.

Die Stellrichtung, in welcher der erste Mitnehmer in seine Mitnahmeposition hineinbewegbar ist, ist vorzugsweise identisch mit jener Stellrichtung, in welcher der zweite Mitnehmer aus der Mitnahmeposition heraus in seine Ausstellposition bewegbar ist. Diese Ausbildung ermöglicht eine besonders einfache Kopplung der Stellbewegung des ersten Mitnehmers mit der Stellbewegung des zweiten Mitnehmers.

Zweckmäßig ist ein gemeinsames Stellmittel für den ersten Mitnehmer und den zweiten Mitnehmer vorgesehen. Auf diese Weise sind die Stellbewegungen synchron ausführbar.

Ein weiterer Nutzen wird darin gesehen, dass die Anordnung der Mitnehmer angepasst ist an eine Form, die als Formkasten ausgeführt ist, wobei der Formkasten Kastenfüße aufweist, welche an der Unterseite des Formkastens nach unten hervorstehen, und dass der zweite Mitnehmer zwecks dieser Anpassung auf dem Niveau der Kastenfüße angeordnet ist, so dass im Betrieb ein Formkasten immer über den zweiten Mitnehmer hinwegbewegbar ist, wenn dieser seine Ausstellposition einnimmt. Formkästen mit Kastenfüßen sind üblich bei Süßwarenproduktionsanlagen, die dazu hergerichtet sind, Süßwarenartikel in Formpuder herzustellen. In dem Formpuder wird ein negativer Abdruck des Süßwarenartikels erzeugt, beispielsweise durch einen Formstempel. Formkästen mit Formpuder müssen insbesondere nach der Erzeugung des Abdrucks ruckfrei transportiert werden, um den Abdruck nicht zu zerstören. Verschleiß der Antriebsbauteile stört den ruckfreien Weitertransport.

Grundsätzlich ist es für Süßwarenproduktionsanlagen, die Formpuder verwenden günstig, auf Transportketten zu verzichten. Dies, weil Transportketten in der Regel in der gesamten Süßwarenproduktionsanlage umlaufen und deswegen Formpuder ausgeschleppt werden kann, das dann andere Teile der Süßwarenproduktionsanlage verschmutzen würde. Auch bekannt ist es, die Transportkette in mehrere kürzere Teile aufzuteilen, so besteht jedoch Ruckgefahr an den Übergabestellen von einer zur nächsten Transportkette.

Der erste Mitnehmer und der zweite Mitnehmer sind zweckmäßig so gestaltet, dass sie zwischen zwei aufeinanderfolgenden Formen oder Formkästen als Abstandshalter wirken. Dadurch sind Formen/Formkästen stets in ihrer Position gehalten und können nicht verrutschen.

Ein weiterer Nutzen ergibt sich wenn entweder der erste Mitnehmer oder der zweite Mitnehmer in den Zwischenraum zwischen zwei Formen hineinragt, wobei die Mitnehmer so ausgelegt sind, dass während einer Übergangsphase der erste Mitnehmer noch nicht vollständig aus dem Zwischenraum herausbewegt und der zweite Mitnehmer noch nicht vollständig in den Zwischenraum hineinbewegt ist.

Wenn beispielsweise der erste Mitnehmer zwischen zwei Formen heraus bewegt wird, um in seine Ausstellposition zu gelangen, dann gelangt die Spitze des zweiten Mitnehmers schon in den Zwischenraum bevor der erste Mitnehmer komplett aus dem Zwischenraum herausbewegt worden ist. Wegen dieser Übergangsphase der Mitnehmer sind die Formen stets von Mitnehmern eingefasst und können nicht verrutschen. Sie behalten stets den gewünschten Abstand zueinander.

Die Mitnehmer können so angeordnet sein, dass der erste Mitnehmer einen Formkasten im Betrieb oberhalb des Formkastenfußes berührt, und der erste Mitnehmer und der zweite Mitnehmer in übereinanderliegenden Ebenen bewegbar sind. Der erste Mitnehmer kann dadurch flächig an einer Außenwand der Form beziehungsweise eines Formkastens angreifen. Außerdem ist es möglich, die Mitnehmer so zu gestalten, dass sich ihre Spitzen um ein Stück überlappen. Auf diese Weise kann der Stellweg beider Mitnehmer verkürzt werden und trotzdem ist gewährleistet, dass die Mitnehmer übereinander her bewegbar sind und der Zwischenraum zwischen zwei Formen ist stets von wenigstens einem Mitnehmer und übergangsweise von beiden Mitnehmern auf Abstand gehalten.

Eine Weiterbildung sieht vor, dass der erste Mitnehmer an einer ersten Schubstange angeordnet ist, dass der zweite Mitnehmer an einer zur ersten parallel gelagerten zweiten Schubstange angeordnet ist, und dass beide Schubstangen angetrieben sind. Die Schubstangen sind linear gelagert. Zum Antrieb eignet sich beispielsweise fluidische Antriebselemente, wie Hydraulikantriebe oder elektrische Antriebsmaschinen.

Der Antrieb zum Transport des ersten Mitnehmers kann mit dem Antrieb zum Transport des zweiten Mitnehmers gekoppelt sein, so dass der Bewegungsfortschritt des einen Mitnehmers abhängig ist von dem Bewegungsfortschritt des anderen Mitnehmers. Die Kopplung der Mitnehmerbewegungen kann eine indirekte Kopplung sein, beispielsweise über Bewegungsaufnehmer und Stellmotoren oder eine direkte Kopplung, beispielsweise eine mechanische Bewegungskopplung.

Vorzugsweise ist ein erstes Schubelement vorgesehen, mit dem die erste Schubstange antreibbar ist und ein zweites Schubelement vorgesehen, mit dem die zweite Schubstange antreibbar ist. Schubstange und Schubelement sind voneinander getrennt. Die Schubstangen sind so angeordnet, dass sie quer zur Transportrichtung bewegt werden können. Dadurch wird in dieser Querrichtung die Stellbewegung der Mitnehmer ermöglicht, die an den Schubstangen angebracht sind. Demgegenüber sind die Schubelemente nicht quer bewegbar. Die Übertragung der Vorwärts-/Rückwärtsbewegung von den Schubelementen in die Schubstangen erfolgt über Bolzen (Mitnehmerbolzen).

Einfacherweise weisen das erste Schubelement und das zweite Schubelement eine Verzahnung auf. Die Verzahnung ist günstig, um eine Antriebsbewegung in die Schubelemente zu übertragen.

Das erste Schubelement und das zweite Schubelement können über ein gemeinsames Antriebselement gekoppelt sein. Weil für die gegensätzlich zu bewegenden Schubelemente, Schubstangen und Mitnehmer nur ein einziges Antriebselement vorgesehen ist, ist der Antrieb sehr kompakt.

Zweckmäßig ist das Antriebselement als Zahnrad ausgebildet, das zwischen den Schubstangen angeordnet ist und formschlüssig mit diesen in Eingriff steht. Durch die Anordnung des Zahnrades zwischen symmetrisch angeordneten verzahnten Schubstangen ergeben sich die gegensätzlichen Bewegungsrichtungen der Schubstangen zwangsläufig.

Eine Verbesserung wird auch dann gesehen, wenn zumindest der Antrieb zum Transport eines Mitnehmers einen Elektromotor (E-Motor) oder eine E-Motor-Getriebe-Kombination aufweist. Bei einer Ausführungsform mit symmetrisch angeordneten verzahnten Schubstangen und einem gemeinsamen Zahnrad, das beide Schubstangen in entgegen gesetzten Richtungen bewegt, kann dies sehr effektiv mit einem E-Motor oder einer E-Motor-Getriebe-Kombination angetrieben werden. Die gegensätzlichen Bewegungen der Mitnehmer und Schubstangen bewirken vorteilhaft auch einen Ausgleich der hin und her bewegten Massen der Transportvorrichtung, wobei die Masse der Formen vernachlässigt werden muss.

Anstelle eines ersten Mitnehmers und eines zweiten Mitnehmers kann beiderseits des Transportabschnitts je ein Mitnehmer vorgesehen sein, so dass ein erstes Mitnehmerpaar beziehungsweise ein zweites Mitnehmerpaar gebildet ist. Die Mitnehmer eines Mitnehmerpaares sind vorzugsweise zur Transportrichtung des Transportabschnitts symmetrisch angeordnet. Erfindungsgemäß ist eine Transportvorrichtung für einen abschnittsweisen Transport von Formen einer Süßwarenproduktionsanlage entlang einer Transportstrecke vorgesehen, umfassend je einen angetriebenen ersten Mitnehmer für jeden der Transportabschnitte der Transportstrecke, wobei wenigstens ein Stellmittel vorgesehen ist, so dass jeder erste Mitnehmer senkrecht zur Transportrichtung der Form hin und her stellbar ist zwischen einer Mitnahmeposition, in welcher dieser eine Form hintergreift und einer Ausstellposition, in welcher dieser die Form passieren kann, bei welcher der Mitnehmer parallel zur Ebene der Form (d.h. in der Ebene der Form) sowie senkrecht zur Transportrichtung der Form translatorisch bewegbar ist. Auf diese Weise wird vermieden, dass dann eine vertikale Bewegungskomponente in die Form/Formkasten übertragbar ist, wenn der Mitnehmer von der Mitnahmeposition in seine Ausstellposition umgestellt wird. Die Form kann so aufgrund der translatorischen ebenen Stellbewegung, nicht senkrecht zur Ebene der Form angehoben werden. Ein Formkasten mit Formpuder wird auf diese Weise stets sanft und ruckfrei bewegt.

Das Stellmittel, mit dem der erste Mitnehmer von seiner Mitnahmeposition in seine Ausstellposition bewegbar ist, weist zweckmäßig einen lineargeführten Querschlitten auf. Der Querschlitten ist vorzugsweise in einer Ebene bewegbar, die parallel zur Bewegungsebene der Formkästen liegt. Die ebene Bewegung des Mitnehmers vermeidet es, wenn er mit einem Formkasten in Berührung ist, eine Bewegungskomponente in den Formkasten zu übertragen, welche diesen aus seiner Bewegungsebene anhebt.

In gleicher Weise kann das Stellmittel, mit dem der zweite Mitnehmer von seiner Mitnahmeposition in seine Ausstellposition bewegbar ist, ebenfalls einen lineargeführten Querschlitten aufweisen. Vorteilhaft ist auch dieser in einer Ebene bewegbar, die parallel zur Bewegungsebene der Formkästen liegt.

Besonders günstig ist eine Ausführung, bei der das Stellmittel für den ersten Mitnehmer und das Stellmittel für den zweiten Mitnehmer integriert sind und zwar so, dass ein gemeinsamer lineargeführter Querschlitten vorgesehen ist, an dem sowohl der erste Mitnehmer als auch der zweite Mitnehmer angebracht ist.

Ein solcher Querschlitten kann als Eingriffswechsler bezeichnet werden, weil er von "Eingriff" (Hintergreifen der Form) des ersten Mitnehmers auf "Eingriff" des zweiten Mitnehmers wechselt. Dieser Wechsel des Eingriffs/ Hintergriffs ist mit einer einzigen Bewegung des Eingriffswechslers erledigt.

Wenn der erste Mitnehmer seine Mitnahmeposition einnimmt, befindet sich der zweite Mitnehmer in seiner Ausstellposition und umgekehrt. Wird der gemeinsame Querschlitten von einer Endlage in die andere Endlage bewegt, bewegt sich dadurch der erste Mitnehmer von seiner Mitnahmeposition in seine Ausstellposition. Gleichzeitig bewegt der Querschlitten auch den zweiten Mitnehmer, nämlich von seiner Ausstellposition in seine Mitnahmeposition.

Zum Hin- und Herbewegen des Querschlittens zwischen seinen Endlagen, beziehungsweise zum Hin- und Herbewegen der Mitnehmer kann ein E-Motor oder eine E-Motor-Getriebe-Kombination vorgesehen sein. Günstig ist es, wenn eine halbe Umdrehung der Antriebswelle des E-Motors beziehungsweise einer Ausgangswelle der E-Motor-Getriebe-Kombination ausgenutzt wird, um den Querschlitten von einer Endlage in die andere Endlage zu bewegen. Die entgegengesetzte Bewegung des Querschlittens wird erreicht, in dem sich die Antriebswelle des E-Motors beziehungsweise die Ausgangswelle der E-Motor-Getriebe-Kombination eine halbe Umdrehung in derselben oder um eine halbe Umdrehung in der entgegengesetzten Drehrichtung bewegt wird.

Um den Positionswechsel der beiden Mitnehmer durchzuführen kann der Querschlitten verschiebbar an einem quer zur Transportrichtung angeordneten Querträger gelagert sein. An dem Querschlitten greift dann ein Antriebselement an, das die hin- und hergehende Verstellbewegung des Querschlittens bewirkt.

Zweckmäßig trägt der Querschlitten seinerseits je ein Linearlager für jede der Schubstangen. Das Linearlager umfasst ein an dem Querschlitten angeordnetes Trägerelement und vorzugsweise daran angebrachte Gleitlagerelemente. Die Schubstangen weisen zweckmäßig einen mehrseitigen oder polygonalen Querschnitt auf, beispielsweise ein Viereck. Günstig ist das Linearlager an den Querschnitt der Schubstange angepasst, wodurch die Schubstange verdrehsicher geführt ist. Das Linearlager kann ferner so gestaltet sein, dass es den Querschnitt der Schubstange nur teilweise umfasst. Eine Seitenfläche der Schubstange behält dann einen Bereich, der nicht von dem Linearlager verdeckt ist. In dem freien Seitenbereich der Schubstange kann der Mitnehmer parallel zur Transportrichtung hin und her durch die Lagerstelle bewegt werden.

Einfacherweise ist das Trägerelement aufrecht an dem Querschlitten angeordnet. An einer Seite des Trägerelements sind die Gleitlagerelemente angebracht. Diese können mit Gleitflächen versehen sein, die Kräfte in Schwerkraftrichtung sowie in entgegengesetzter Richtung aufnehmen können. Vorzugsweise sind für eine Schubstange mit viereckigem Querschnitt ein oberes Gleitlagerelement und ein unteres Gleitlagerelement vorgesehen. Die Ränder derjenigen Seitenfläche der Schubstange, an welcher der Mitnehmer angebracht ist, sind günstigerweise von einem Haltekragen des oberen Gleitlagerelements und einem Haltekragen des unteren Gleitlagerelements umgriffen, so dass die Schubstange nicht an der freien Seitenfläche aus der Lagerung heraus gelangen kann. Die der freien Seitenfläche gegenüberliegende Rückseitenfläche einer Schubstange kann von einem zusätzlichen seitlichen Gleitlagerelement abgestützt sein. Alternativ können das obere Gleitlagerelement und/oder das untere Gleitlagerelement so gestaltet sein, dass ein Haltekragen den Rand der Rückseitenfläche der Schubstange umgreift.

Wenn die beiden Schubstangen parallel zueinander angeordnet sind, kann zwischen diesen ein mittleres Gleitlagerelement angeordnet sein, welches Gleitflächen für beide Schubstangen aufweist und mit je einem Haltekragen für jede Schubstange versehen ist.

Es wird ein Linearlager für eine Schiene mit polygonförmigem Querschnitt vorgeschlagen, vorzugsweise viereckig. Das Linearlager umfasst wenigstens ein Gleitlagerelement und einen Tragbereich zur Halterung des Gleitlagerelements, mit der Maßgabe, dass der polygonförmige Querschnitt der Schiene teilweise umfasst und verdrehsicher geführt ist, wobei ein Öffnungsbereich vorgesehen ist, in dem eine Seitenfläche der Schiene frei zugänglich ist, und wobei die Öffnungsweite des Öffnungsbereichs geringer ist, als der geringste Durchmesser des polygonförmigen Querschnitts. Dabei ist der Tragbereich aus einem plattenförmigen Trägerelement gebildet, welches eine im Wesentlichen ebene Montagefläche aufweist. Das Gleitlagerelement ist an der Montagefläche des Trägerelements angebracht und das Gleitlagerelement und die Verbindung mit der Montagefläche des Trägerelements sind so gestaltet, dass eine Lagerbelastung aufgenommen werden kann, die im Wesentlichen parallel zur Montagefläche des Trägerelements orientiert ist.

Das Linearlager weist vorzugsweise eines oder mehrere Gleitlagerelement aus einem monolithischen Gleitlagerwerkstoff auf, beispielsweise einem Kunststoff. Das so gestaltete Gleitlagerelement übt eine tragende Funktion aus. Es nimmt Kräfte auf und leitet sie in das Trägerelement. Außerdem weist das Gleitlagerelement Gleitflächen mit guten Gleiteigenschaften auf.

Nachstehend sind Ausführungsbeispiele der Erfindung beschrieben und teils in einer Zeichnung beispielhaft dargestellt und anhand mehrerer Figuren detailliert beschrieben. Es zeigen:
- Figs. 1A-1D: das Prinzip des abschnittsweisen Transports eines Formkastens entlang einer Transportstrecke,
- Fig. 2: Antrieb für zwei gegenläufige Mitnehmer eines Transportabschnitts,
- Fig. 3: Schnittdarstellung gemäß III - III aus Fig. 2,
- Fig. 4: eine schematische Darstellung der Schubelemente und der Schubstangen sowie einer Querlagerung,
- Fig. 5: einen Eingriffswechsler mit Antrieb für Querschlitten
- Fig. 6: den Eingriffswechsler gemäß Fig. 5 in umgestellter/gewechselter Position,
- Fig. 7: einen Eingriffswechsler mit einem alternativen Querantrieb,
- Fig. 8: den Eingriffswechsler gemäß Fig. 7 in umgestellter/gewechselter Position,
- Fig. 9: einen ersten alternativen Antrieb für gegenläufige Mitnehmer,
- Fig. 10: einen zweiten alternativen Antrieb für gegenläufige Mitnehmer,
- Fig. 11A: eine Alternative zu der Querlagerung gemäß Fig. 4,
- Fig. 11B: eine andere Position der Querlagerung gemäß Fig. 11A.

Zunächst wird ein Ausführungsbeispiel einer Transportvorrichtung ohne Bezug zu einer Zeichnung vorgeschlagen. Diese Transportvorrichtung ist für einen abschnittsweisen Transport von Formen einer Süßwarenproduktionsanlage entlang einer Transportstrecke vorgesehen und umfasst je einen angetriebenen ersten Mitnehmer für jeden der Transportabschnitte der Transportstrecke, wobei wenigstens ein Stellmittel vorgesehen ist, so dass jeder erste Mitnehmer senkrecht zur Transportrichtung der Form hin und her stellbar ist zwischen einer Mitnahmeposition, in welcher dieser eine Form hintergreift und einer Ausstellposition, in welcher dieser die Form passieren kann, wobei der erste Mitnehmer parallel zur Ebene der auf der Transportvorrichtung liegenden Form sowie senkrecht zur Transportrichtung der Form entlang der Transportstrecke translatorisch bewegbar ist.

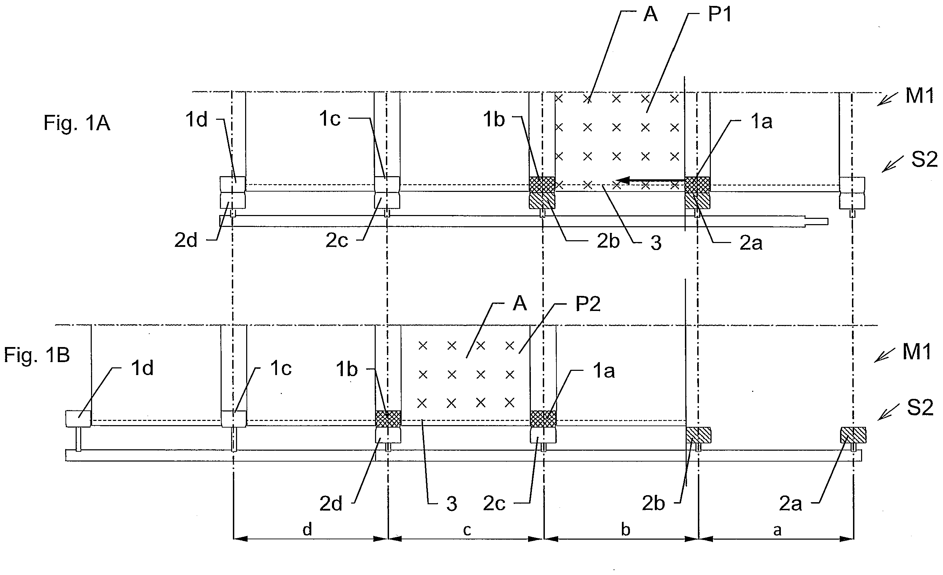

Die Figuren 1A bis 1D verdeutlichen das Prinzip, mit dem die neue Transportvorrichtung V eine Form, beziehungsweise einen Formkasten A abschnittsweise entlang einer Transportstrecke transportiert. Es sind die gleichlangen Transportabschnitte a, b, c und d dargestellt. Innerhalb jedes Transportabschnitts ist ein erster Mitnehmer 1 und ein zweiter Mitnehmer 2 vorgesehen, die nachfolgend mit dem Buchstaben des jeweiligen Transportabschnitts indiziert sind. In Transportabschnitt a wirken der erste Mitnehmer 1a sowie der zweite Mitnehmer 2a, in Transportabschnitt b wirken der erste Mitnehmer 1b sowie der zweite Mitnehmer 2b u.s.w.

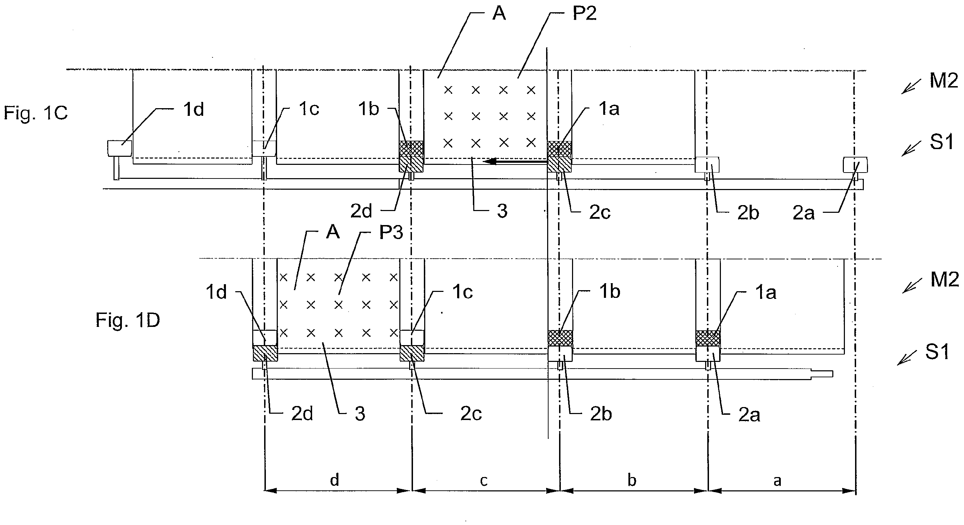

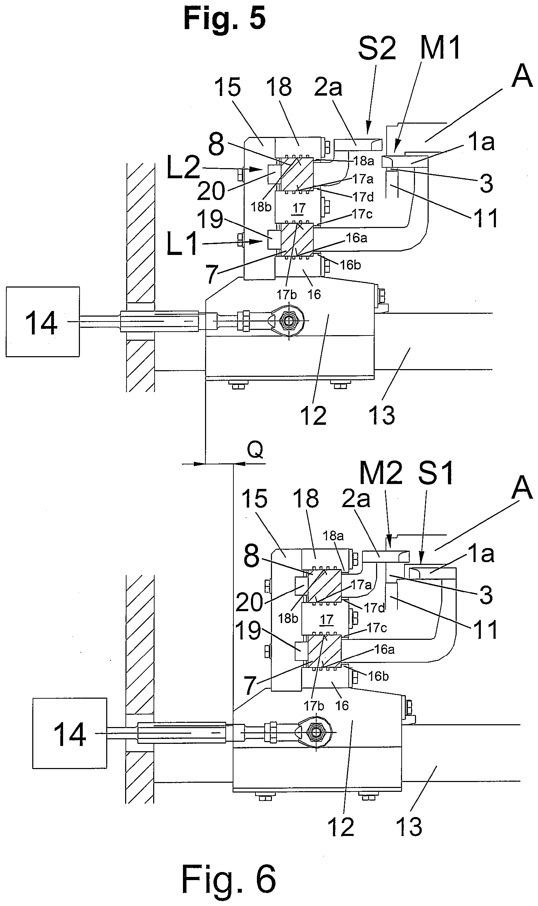

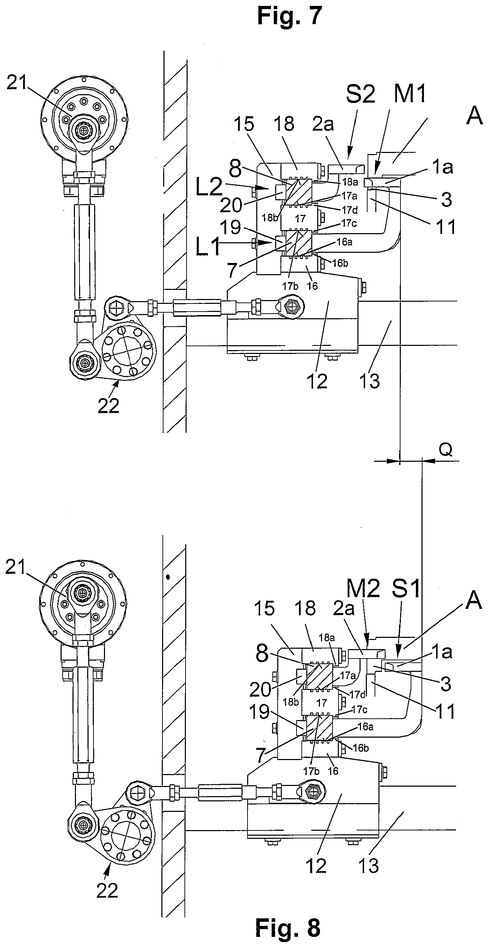

In den Figuren 1A bis 1D ist jeweils eine Symmetriehälfte eines bekannten Formkastens dargestellt, wie er beispielsweise in einer Süßwarenproduktionsanlage zum Einsatz kommt, mit der Süßwarenartikel in Formpuder hergestellt werden. Solche Formkästen sind bekanntermaßen an zwei gegenüberliegenden Rändern jeweils mit einem sogenannten Kastenfuß 3 versehen. Üblicherweise sind die Kastenfüße an denjenigen Rändern des Formkastens A vorgesehen, die dann, wenn der Formkasten durch die Süßwarenproduktionsanlage gefördert wird, parallel zur Transportrichtung der Süßwarenproduktionsanlage ausgerichtet sind. Die Kastenfüße 3 stehen an der Unterseite des Formkastens A hervor. Sie dienen unter anderem der guten Stapelbarkeit von Formkästen aufeinander zu Lagerungszwecken. Kastenfüße sowie die Ränder oberhalb der Kastenfüße sind in der Regel mit einer komplementären Kontur versehen, die so gestaltet ist, dass damit einem seitlichen Verrutschen gestapelter Formkästen entgegenwirkt wird. In den Figuren 1A und 1B sind die Mitnehmer 1a-1d jeweils in Kontakt mit den Formkästen, während die Mitnehmer 2a-2d den Transportweg der Formkästen freigeben (vgl. Fig. 5 und Fig. 7). Umgekehrt sind in den Figuren 1C und 1D die Mitnehmer 2a-2d in Kontakt mit den Formkästen, während die Mitnehmer 1a-1d den Transportweg der Formkästen freigeben (vgl. Fig. 6 und Fig. 8).

Für die nicht dargestellte Symmetriehälfte der Formkästen sind vorzugsweise ebenfalls für jeden Transportabschnitt ein erster und ein zweiter Mitnehmer vorgesehen, damit die Formkästen nicht verkannten.

In Fig. 1A ist der Formkasten A mit einem ersten Mitnehmer 1a in Kontakt. In dieser seitlichen Kontaktposition hintergreifen auch alle anderen ersten Mitnehmer der Transportabschnitte a - d jeweils einen Formkasten. Diese hintergreifende Position wird für alle ersten Mitnehmer la - 1d als Mitnahmeposition M1 bezeichnet. Anhand des Formkastens A ist nachfolgend exemplarisch die schrittweise Vorwärtsbewegung erläutert. In Fig. 1A befindet sich der Formkasten A in einer Transportposition P1. Aus dieser wird der Formkasten A von dem ersten Mitnehmer 1a in der dargestellten Pfeilrichtung um die Länge eines Transportabschnitts vorwärts mitgenommen und in Transportrichtung der Süßwarenproduktionsanlage weiterbewegt. Der Formkasten A erreicht dadurch die in Fig. 1B gezeigte Transportposition P2. Während der Vorwärtsbewegung des ersten Mitnehmers la wird der zweite Mitnehmer 2a des Transportabschnitts a in entgegengesetzter Richtung zurückbewegt. Der zweite Mitnehmer 2a befindet sich in einer seitlichen Ausstellposition S2, in welcher er an dem Formkasten A vorbei zurück zum Anfang des Transportabschnitts a bewegbar ist.

In Fig. 1C befindet sich der Formkasten A noch an der gleichen Transportposition P2, wie in der vorherigen Figur. Die zweiten Mitnehmer 2a-2d sind jedoch von ihrer Ausstellposition quer zur Transportrichtung verschoben worden. Die zweiten Mitnehmer 2a-2d nehmen nun ihre Mitnahmeposition M2 ein, in der jeder zweite Mitnehmer Kontakt mit einem der Formkästen hat und diesen weiterbefördert, sodass nunmehr der zweite Mitnehmer 2c mit Formkasten A in Kontakt gebracht ist und ihn in Pfeilrichtung mitnimmt. Gleichzeitig sind die ersten Mitnehmer 1a - 1d aus ihrer Mitnahmeposition heraus bewegt worden und nehmen nun ihre Ausstellposition S1 ein, in der sie an den Anfang des jeweiligen Transportabschnitts zurückbewegt werden.

Als nächstes zeigt Fig. 1D, wie der zweite Mitnehmer 2c den Formkasten A um die Länge eines Transportabschnitts mitgenommen und weiter in eine Transportposition P3 befördert hat. Gleichzeitig ist der erste Mitnehmer 1c an den Anfang des Transportabschnitts c zurückbewegt worden.

Auf diese Weise werden Formkästen innerhalb eines Transportabschnitts abwechselnd von einem der ersten Mitnehmer 1a-1d beziehungsweise einem der zweiten Mitnehmer 2a-2d weiterbefördert. Immer dann, wenn einer der Mitnehmer einen Formkasten mitnimmt, wird gleichzeitig der andere Mitnehmer zurück an den Anfang des jeweiligen Transportabschnitts bewegt. Dann folgt ein Positionswechsel der Mitnehmer von der jeweiligen Mitnahmeposition M1/M2 in die Ausstellposition S1/S2 beziehungsweise umgekehrt. Danach kann innerhalb desselben Transportabschnitts der nächste Formkasten befördert werden.

Wenn pro Transportabschnitt, wie im Stand der Technik, nur ein Mitnehmer vorhanden ist, der zuerst zurück zum Anfang des Transportabschnitts bewegt werden muss, bevor der nächste Formkasten entlang desselben Transportabschnitts befördert werden kann, steht der Formkasten während dieser Zeit still.

Die vorgeschlagene Transportvorrichtung reduziert diese Stillstandszeit. Dies weil dann, wenn der erste Mitnehmer 1a-1d einen Formkasten um einen Transportabschnitt weiterbefördert hat, gleichzeitig der zweite Mitnehmer 2a-2d bereits wieder am Anfang des jeweiligen Transportabschnitts angelangt ist. Die Stillstandszeit des Formkastens ist kurz, weil nur die Position der Mitnehmer von der jeweiligen Mitnahmeposition M1/M2 in die Ausstellposition S1/S2 beziehungsweise umgekehrt gewechselt werden muss. Der hierfür von den Mitnehmern zurückzulegende Weg ist kurz und deswegen ist auch die Stillstandszeit des Formkastens reduziert.

Die Transportvorrichtung V ist so ausgelegt, dass die parallel zur Transportbahn ablaufenden gegenläufigen Bewegungen der beiden Mitnehmer gleichförmig ablaufen können. Ein Jeder Mitnehmer 1a-1d sowie 2a-2d wird bei der Vorwärtsbewegung genauso beschleunigt und
verzögert, wie bei seiner Rückwärtsbewegung. Dies mindert den Verschleiß im Vergleich zu einem Mitnehmer gemäß dem Stand der Technik, bei dem die Rückwärtsbewegung schneller durchgeführt werden muss, wenn die Stillstandszeit reduziert werden soll.

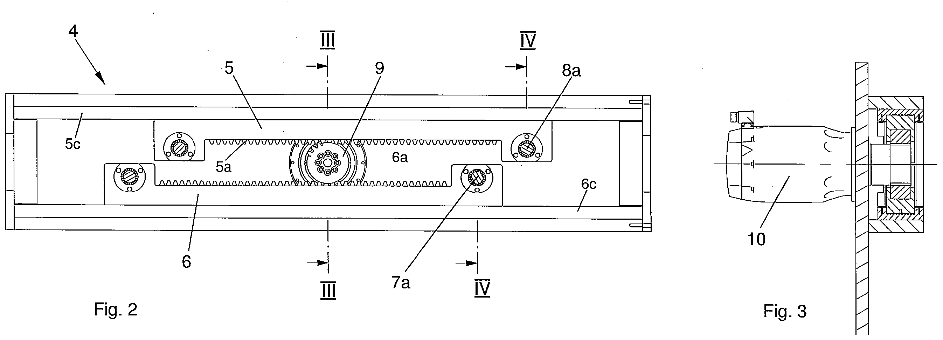

Fig. 2 zeigt eine Antriebseinheit 4, die dem Antrieb der ersten Mitnehmer parallel zur Transportrichtung und gleichzeitig auch dem Antrieb der zweiten Mitnehmer parallel zur Transportrichtung dient. Zu diesem Zweck ist ein oberes Schubelement 5 mit Verzahnung 5a vorgesehen, das indirekt mit den ersten Mitnehmern zusammenwirkt, sowie ein unteres Schubelement 6 mit Verzahnung 6a, das indirekt mit den zweiten Mitnehmern zusammenwirkt. Die Transportbewegung des unteren Schubelements 6 wird über einen Bolzen 7a, der mit diesem Schubelement zusammenwirkt, in eine untere Schubstange 7 übertragen, an welcher der erste Mitnehmer 1a angebracht ist. Gleichermaßen wird die Transportbewegung des oberen Schubelements 5 über einen Bolzen 8a, der mit diesem Schubelement zusammenwirkt, in eine obere Schubstange 8 übertragen, an welcher der zweite Mitnehmer 2a angebracht ist.

Die obere und die untere Schubstange sind jeweils aus mehreren Stücken zusammengesetzt. Die Gesamtzahl der Mitnehmer ist über die Schubstangenstücke aufgeteilt.

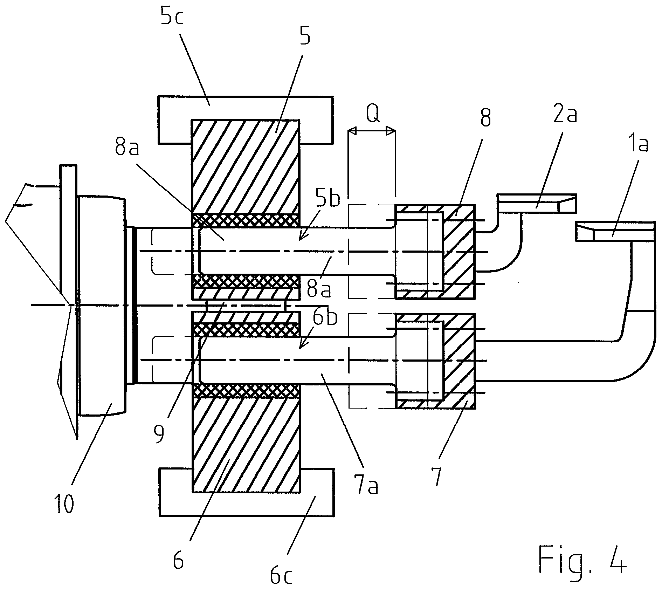

Die Übertragung der Transportbewegung von den Schubelementen 5/6 erfolgt über eine Bohrung 5b/6b in der jeweiligen Schubstange, in welcher der Bolzen 7a/8a eingefügt und axial verschiebbar aufgenommen ist (vgl. Fig. 4).

Fig. 2 stellt weiterhin dar, dass das Schubelement 5 mittels einer Linearführung 5c und das Schubelement 6 mittels einer Linearführung 6c gelagert ist. Die Verzahnungen 5a beziehungsweise 6a der Schubelemente sind einander zugewandt und stehen mit einem Zahnrad 9 in Eingriff. Das Zahnrad 9 bewirkt auf diese Weise eine mechanische Kopplung der Bewegung der beiden Schubelemente 5 und 6. Diese werden dadurch gleichförmig, jedoch in entgegengesetzten Richtungen bewegt und übertragen diese Bewegung auf die Schubstangen 7/8.

Fig. 3 zeigt eine Schnittdarstellung der Antriebseinheit 4 gemäß dem Schnittverlauf III - III, der in Fig. 2 eingetragen ist. Der Schnitt verläuft durch das Zahnrad 9. Außerdem ist ein Motor 10 (hier ein Servomotor mit angeflanschtem Planetengetriebe) dargestellt, der das Zahnrad 9 antreibt.

Die Antriebseinheit 4 ist so ausgelegt, dass damit die Mitnehmer 1a-1d sowie 2a-2d mehrerer Transportabschnitte angetrieben werden. Es ist nicht erforderlich, für jeden der Transportabschnitte a-d eine separate Baueinheit zum Antrieb der Schubstangen 7/8 vorzusehen. Die Anzahl der mit einer Baueinheit betreibbaren Transportabschnitte, beziehungsweise deren Mitnehmer, hängt von der zur fördernden Last der Formenkästen sowie von der verfügbaren Leistung des Motors 10 ab.

Fig. 4 ist eine Schnittdarstellung gemäß dem in Fig. 2 eingezeichneten Schnittverlauf IV-IV . Fig. 4 zeigt Teile der Antriebseinheit 4. Außerdem sind die beiden Schubstangen 7/8 mit den Mitnehmern 1a/2a und der Motor 10 gezeigt, der das Zahnrad 9 antreibt, welches die Vorwärts-/Rückwärtsbewegung in die beiden Schubelemente 5/6 überträgt. Zu erkennen ist, dass die obere Schubstange 8 fest mit einem Bolzen 8a verbunden ist, über den sie mit dem oberen Schubelement 5 in Verbindung steht. Das obere Schubelement weist eine Lagerbohrung 5b auf, in welcher der Bolzen 8a axial verschiebbar aufgenommen ist (Querlagerung). Die untere Schubstange 7 ist ebenfalls mit einem Bolzen 7a fest verbunden, über den sie mit dem unteren Schubelement 6 in Verbindung steht. Das untere Schubelement 6 weist gleichfalls eine Lagerbohrung 6b auf, in welcher der Bolzen 7a axial verschiebbar aufgenommen ist (Querlagerung). Die Schubstangen 7/8 mit den daran angeordneten Mitnehmern 1a/2a sind gemäß dem Pfeil Q quer zur Transportrichtung verstellbar (Querlagerung), wohingegen die Schubelemente 5/6 als Aufnahme für diese Querlagerung dienen und selbst nicht quer zur Transportrichtung bewegt werden können. Die Querlagerung schafft einen Ausgleich und ermöglicht in jeder "Querposition" die Übertragung einer Bewegung in Transportrichtung. Der Motor 10, der die Vorwärts-/Rückwärtsbewegung der beiden Schubelemente 5/6 bewirkt, ist weder quer zur Transportrichtung, noch in Transportrichtung bewegbar. Innerhalb einer Süßwarenproduktionsanlage ist der Motor 10 stationär angeordnet. Für die Schubstangen 7/8 ist jeweils eine linear Lagerung vorgesehen (nicht dargestellt), welche die Bewegung der Schubstangen in Transportrichtung lagert. Diese Lagerung ist in den folgenden Figuren gezeigt.

Die Figuren 5 und 6 stellen außerdem dar, wie die Bewegung der Schubstangen 7/8 und der daran angebrachten Mitnehmer la/2a quer zur Transportrichtung erzeugt wird. Der erste Mitnehmer 1a muss (quer zur Transportrichtung) in seine Mitnahmeposition M1 hinein bewegt werden können und von der Mitnahmeposition zurück in seine Ausstellposition S1 bewegt werden können. Für den zweiten Mitnehmer 2a gilt dies in gleicher Weise. Die Figuren 5 und 6 zeigen, wie der Positionswechsel der beiden Mitnehmer 1a/2a (quer zur Transportrichtung) mittels eines Eingriffswechslers E vonstatten geht. Ein Eingriffwechsler umfasst Stellmittel, mit denen jeder Mitnehmer hin und her stellbar ist zwischen der Mitnahmeposition M1/M2, in welcher dieser den Formkasten hintergreift und der Ausstellposition S1/S2, in welcher dieser den Formkasten passieren kann.

In Fig. 5 ist ein Rand eines Formkastens A dargestellt, der einen Kastenfuß 3 aufweist. Der Kastenfuß 3 steht auf einer Schiene 11, die Teil der Süßwarenproduktionsanlage ist. Für den Transport des Formkastens A wird sein Kastenfuß 3 gleitend über die Schiene 11 bewegt. Weiterhin zeigt Fig. 5 einen ersten Mitnehmer 1a, der in Bezug auf den Formkasten A teilweise unterhalb desselben angeordnet ist und ihn im Bereich des Kastenfußes 3 hintergreift. Diese Position ist die Mitnahmeposition M1 des ersten Mitnehmers 1a. Es ist ein zweiter Mitnehmer 2a dargestellt, der seitlich neben dem Formkasten A angeordnet ist und zwar auf einem Niveau oberhalb des Kastenfußes 3. Der zweite Mitnehmer 2a nimmt in Fig. 5 seine Ausstellposition S2 ein, in welcher er in Transportrichtung an dem Formkasten A vorbei bewegt werden kann. Wenn der erste Mitnehmer 1a gerade den Formkasten A mitnimmt, wird während dieser Zeit der zweite Mitnehmer 2a entgegen der Transportrichtung des Formkastens A zurückbewegt zum Anfang des Transportabschnitts a (vgl. Fig. 1A).

Dann wird, wie in Fig. 6 dargestellt, mittels des Eingriffwechslers E ein Positionswechsel der beiden Mitnehmer 1a/2a durchgeführt. Der erste Mitnehmer 1a ist in seine Ausstellposition S1 bewegt worden, in der er den Kastenfuß 3 nicht mehr hintergreift. In der Ausstellposition S1 kann der Formkasten A ungehindert in Transportrichtung über den ersten Mitnehmer 1a hinwegtransportiert werden. Gleichzeitig hintergreift jetzt der zweite Mitnehmer 2a den Formkasten A, weil er in seine Mitnahmeposition M2 hineinbewegt worden ist.

Um den Positionswechsel der beiden Mitnehmer 1a/2a durchzuführen ist der Eingriffwechsler E mit einem Querschlitten 12 versehen, der verschiebbar an einem quer zur Transportrichtung angeordneten Querträger 13 gelagert ist. An dem Querschlitten 12 greift ein Antriebselement 14 an, das eine hin- und hergehende Verstellbewegung des Querschlittens 12 bewirkt.

Wie in den Figuren 5 und 6 gezeigt, trägt der Querschlitten 12 seinerseits zwei Linearlager L1 und L2. Das Linearlager L1 führt die untere Schubstange 7 und das Linearlager L2 führt die obere Schubstange 8. Die beiden Linearlager L1 und L2 umfassen ein gemeinsames Trägerelement 15, das an dem Querschlitten 12 angebracht ist. An dem Trägerelement 15 sind Gleitlagerelemente angebracht. Die Schubstangen 7 und 8 weisen einen quadratischen Querschnitt auf. Die Linearlager L1 und L2 sind an den quadratischen Querschnitt der Schubstangen angepasst, wodurch jede Schubstange 7/8 verdrehsicher geführt ist. Jedes Linearlager L1/L2 ist ferner so gestaltet, dass es den Querschnitt der Schubstange nur teilweise umfasst. Eine Seitenfläche der Schubstange 7 behält einen freien Bereich, der nicht von dem Linearlager L1 verdeckt ist. In dem freien Seitenbereich der Schubstange ist der erste Mitnehmer 1a angebracht. Die Konstruktion erlaubt es, den ersten Mitnehmer 1a parallel zur Transportrichtung hin und her durch die Lagerstelle zu bewegen.

Das Trägerelement 15 ist aufrecht an dem Querschlitten 12 angeordnet. An einer Seite des Trägerelements 15 sind die Gleitlagerelemente 16, 17 und 18 angebracht. Die Gleitlagerelemente sind mit Gleitflächen versehen sind, welche Kräfte in Schwerkraftrichtung beziehungsweise in entgegengesetzter Richtung aufnehmen. Es ist ein unteres Gleitlagerelement 16 und ein oberes Gleitlagerelement 18 sowie ein mittleres Gleitlagerelement 17 vorgesehen. Die unteren Schubstange 7 ist zwischen einer Gleitfläche 17b des mittleren Gleitlagerelements 17 und einer Gleitfläche 16a des unteren Gleitlagerelements 16 geführt. Die Ränder derjenigen Seitenfläche der unteren Schubstange 7, an welcher der Mitnehmer angebracht ist, sind von einem Haltekragen 16b des unteren Gleitlagerelements 16 und einem Haltekragen 17c des mittleren Gleitlagerelements 17 umgriffen, so dass die untere Schubstange 7 nicht an der freien Seitenfläche aus der Lagerung heraus fallen kann. Die der freien Seitenfläche gegenüberliegende rückwärtige Seitenfläche der unteren Schubstange 7 ist von einem zusätzlichen seitlichen Gleitlagerelement 19 abgestützt.

Die Linearführung L2 für die obere Schubstange 8 ist von dem mittleren Gleitlagerelement 17 gebildet sowie von dem oberen Gleitlagerelement 18. Die obere Schubstange 8 ist mit einer Gleitfläche 18b des oberen Gleitlagerelements 18 sowie mit einer Gleitfläche 17a des mittleren Gleitlagerelements 17 in Kontakt. Ein Haltekragen 18a des oberen Gleitlagerelements 18 und ein Haltekragen 17d des mittleren Gleitlagerelements 17 umgreifen die obere Schubstange 8. Die der freien Seitenfläche gegenüberliegende rückwärtige Seitenfläche der oberen Schubstange 8 ist von einem zusätzlichen seitlichen Gleitlagerelement 20 abgestützt.

Das Ausführungsbeispiel gemäß Fig. 7 ist weitgehend identisch mit Fig. 5. Es unterscheidet sich nur durch einen alternativen Antrieb zum Hin- und Herbewegen des Querschlittens 12. Der alternative Antrieb weist eine E-Motor-Getriebe-Kombination (Getriebemotor 21) auf sowie eine Hebelanordnung 22, welche die Bewegung des Getriebemotors 21 in eine Hin- und Herbewegung umsetzt. Eine halbe Umdrehung der Ausgangswelle des Getriebemotors 21 wird umgesetzt in eine Bewegung des Querschlittens 12 von einer Endlage in die andere Endlage. Die entgegengesetzte Bewegung des Querschlittens 12 wird erreicht, in dem die Ausgangswelle des Getriebemotors 21 entweder um eine halbe Umdrehung in derselben Drehrichtung weitergedreht oder um eine halbe Umdrehung in entgegengesetzter Drehrichtung zurückgedreht wird. Eine einseitige Belastung des Getriebemotors 21 kann vermieden werden, weil er in beiden Drehrichtungen betrieben werden kann. Die beiden Mitnehmer befinden sich in den Positionen S2 beziehungsweise M1.

Fig. 8 zeigt den Eingriffswechsler E gemäß Fig. 7 in umgestellter/gewechselter Position der Mitnehmer. Diese befinden sich in der Position M2 beziehungsweise S1.

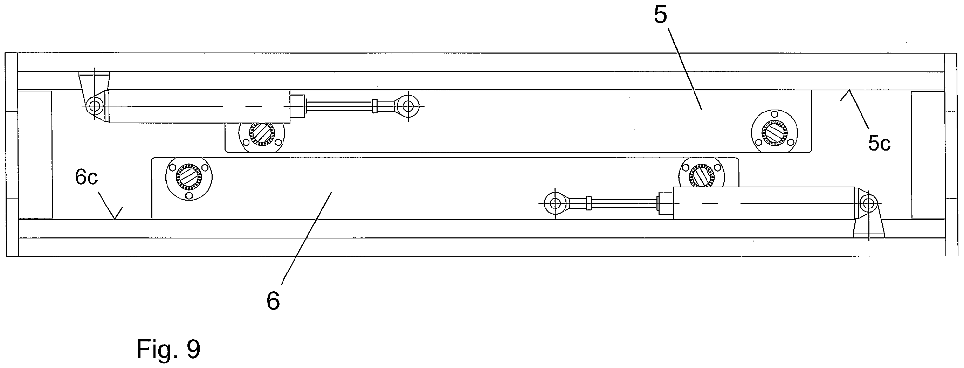

Zu dem Antrieb für die gegenläufig betriebenen Schubelemente 5 und 6, der in Fig. 2 gezeigt ist, gibt es Alternativen. Eine erste Alternative ist in Fig. 9 schematisch dargestellt. Die Schubelemente 5 und 6 sind, wie die Schubelemente gemäß Fig. 2 in einer Linearführung 5c/6c aufgenommen. Jedes Schubelement 5/6 ist jedoch individuell über ein Antriebselement 23 beziehungsweise 24 angetrieben. Im Unterschied zum Ausführungsbeispiel gemäß Fig. 2 ist keine mechanische Bewegungskopplung zwischen den beiden Schubelementen vorgesehen. Das Ausführungsbeispiel gemäß Fig. 9 eignet sich dann, wenn auf eine gleichförmige gekoppelte Bewegung der beiden Schubelemente 5 und 6 verzichtet werden kann, oder dann, wenn die Koppelung der Bewegung auf andere Weise erzeugt werden soll, beispielsweise durch elektronische Steuerung oder Regelung.

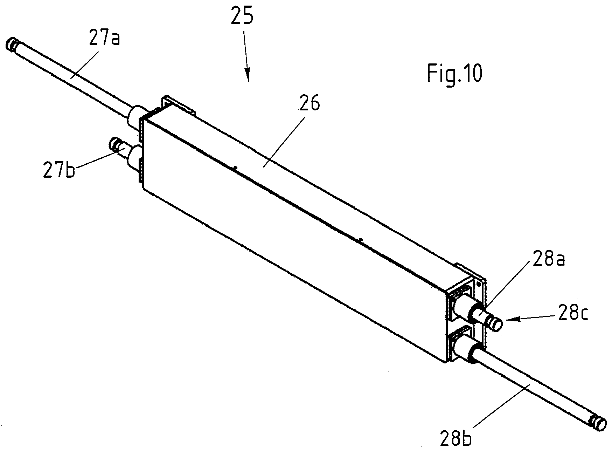

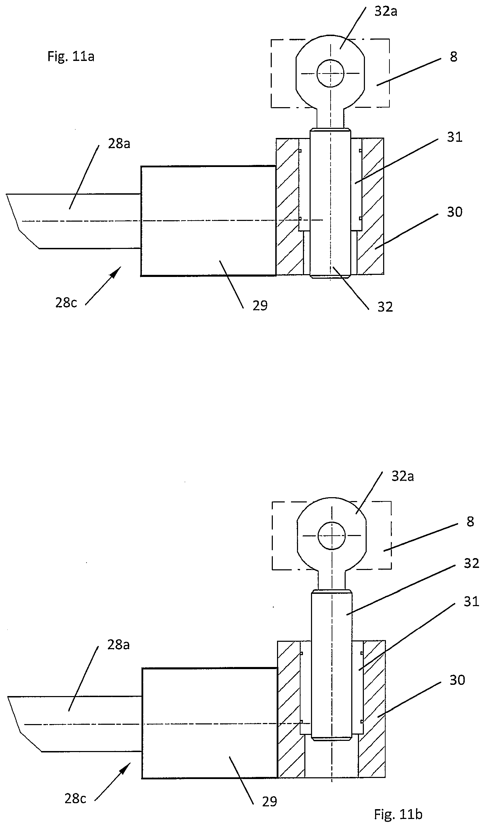

Eine zweite alternative einer Antriebseinheit für die gegenläufigen Mitnehmer ist in Fig. 10 gezeigt. Es handelt sich um eine gekapselte Antriebseinheit 25, bei der die Antriebselemente, wie Zahnrad und verzahnte Schubelemente dem in Fig. 2 gezeigten Prinzip entsprechen, im Unterschied dazu aber geschützt in einem geschlossenen Antriebsgehäuse 26 angeordnet sind. Das Antriebsgehäuse 26 weist zwei Stirnseiten mit je zwei Öffnungen für gegenläufig bewegbare Antriebsstangen 27a/27b sowie 28a/28b auf, die jeweils in Linearlagern laufen. Die Antriebsstangen 27a/27b und 28a/28b weisen vorteilhaft einen zylindrischen Querschnitt auf. In den Öffnungen des Antriebsgehäuses 26 ist für jede Antriebsstange ein üblicher runder Dichtungsring vorgesehen, um die Linearlager vor dem Eindringen von Schmutz zu schützen und Schmutz außerdem aus dem Antriebsgehäuse 26 fernzuhalten. An den freien Enden dieser Antriebsstangen ist jeweils ein Befestigungsbereich, wie der Befestigungsbereich 28c der Antriebsstange 28a vorgesehen, an dem ein passendes Querlagerelement anbringbar ist. Ein entsprechendes Querlagerelement 29 ist in den Figuren 11A und 11B gezeigt.

Gemäß den Figuren 11A und 11B weist das Querlagerelement 29 einen Lagerkörper 30 auf, welcher an dem Befestigungsbereich 28c einer Antriebsstange 28a angebracht ist. In dem Lagerkörper 30 ist quer zur Längserstreckung der Antriebsstange 28a eine Lagerbuchse 31 vorgesehen, in der ein Bolzen 32 verschiebbar gelagert ist. Dieser erfüllt die Funktion des Bolzens 8a gemäß Fig. 2. Das freie Ende 32a des Bolzens 32 ist mit der Schubstange 8 verbunden. Wenn die Schubstange 8 querverstellt wird, folgt der Bolzen 32 nach. Der Verstellweg der Schubstangen gibt somit zwei Endpositionen für den Bolzen 32 vor. Fig. 11A zeigt diejenige Endposition, die der Bolzen 32 einnimmt, wenn die Schubstangen/Mitnehmer die in Fig. 5 dargestellte Position einnehmen. Fig. 11B zeigt die Endposition, die der Bolzen 32 dann einnimmt, wenn die Schubstangen/Mitnehmer die Position einnehmen, die in Fig. 6 dargestellt ist. Der Bolzen 32 ist so ausgelegt, dass er sowohl in der einen Endposition als auch in der anderen Endposition eine Bewegung der Antriebsstange 28a in der Transportrichtung auf die Schubstangen/Mitnehmer übertragen kann.

### Bezugszeichenliste

- 1a: erster Mitnehmer
- 1b: erster Mitnehmer
- 1c: erster Mitnehmer
- 1d: erster Mitnehmer
- 2a: zweiter Mitnehmer
- 2b: zweiter Mitnehmer
- 2c: zweiter Mitnehmer
- 2d: zweiter Mitnehmer
- 3: Kastenfuß
- 4: Antriebseinheit
- 5: Schubelement
- 5a: Verzahnung
- 5b: Lagerbohrung
- 5c: Gleitführung
- 6: Schubelement
- 6a: Verzahnung
- 6b: Lagerbohrung
- 6c: Gleitführung
- 7: untere Schubstange
- 7a: Bolzen
- 8: obere Schubstange
- 8a: Bolzen
- 9: Antriebselement
- 9a: Zahnrad
- 10: Motor
- 11: Schiene
- 12: Querschlitten
- 13: Querträger
- 14: Antriebselement
- 15: Trägerelement
- 16: Gleitlagerelement
- 16a: Gleitfläche
- 16b: Haltekragen
- 17: Gleitlagerelement
- 17a: Gleitfläche
- 17b: Gleitfläche
- 17c: Haltekragen
- 17d: Haltekragen
- 18: Gleitlagerelement
- 18a: Haltekragen
- 18b: Gleitfläche
- 19: Gleitlagerelement
- 20: Gleitlagerelement
- 21: Getriebemotor
- 22: Hebelanordnung
- 23: Antriebselement
- 24: Antriebselement
- 25: Antriebseinheit
- 26: Antriebsgehäuse
- 27a: Antriebsstange
- 27b: Antriebsstange
- 28a: Antriebsstange
- 28b: Antriebsstange
- 28c: Befestigungsbereich
- 29: Querlagerelement
- 30: Lagerkörper
- 31: Lagerbuchse
- 32: Bolzen
- 32a: freies Ende (Bolzen)
- a: Transportabschnitt
- b: Transportabschnitt
- c: Transportabschnitt
- d: Transportabschnitt
- A: Formkasten
- E: Eingriffwechsler
- L1: Linearlager
- L2: Linearlager
- M1: Mitnahmeposition
- M2: Mitnahmeposition
- P1: Transportposition
- P2: Transportposition
- P3: Transportposition
- S1: Ausstellposition
- S2: Ausstellposition
- V: Transportvorrichtung

## Patentansprüche

1. Transportvorrichtung (V) für einen abschnittsweisen Transport von Formen (A) einer Süßwarenproduktionsanlage entlang einer Transportstrecke, umfassend mindestens eine Form einer Süßwarenproduktionsanlage, je einen angetriebenen ersten Mitnehmer (1a, 1b, 1c, 1d) für jeden der Transportabschnitte (a, b, c, d) der Transportstrecke, wobei wenigstens ein Stellmittel (E) vorgesehen ist, so dass jeder erste Mitnehmer senkrecht zur Transportrichtung der Form hin und her stellbar ist zwischen einer Mitnahmeposition (Ml), in welcher dieser eine Form (A) hintergreift und einer Ausstellposition (S1), in welcher dieser die Form (A) passieren kann, wobei der erste Mitnehmer (1a, 1b, 1c, 1d) parallel zur Ebene der auf der Transportvorrichtung liegenden Form (A) sowie senkrecht zur Transportrichtung der Form translatorisch bewegbar ist.

2. Transportvorrichtung nach Anspruch 1, **dadurch gekennzeichnet, dass** zumindest für einen Teil der Transportabschnitte (a, b, c, d) der Transportstrecke je ein zweiter Mitnehmer (2a, 2b, 2c, 2d) vorgesehen ist, der ebenfalls zwischen einer Mitnahmeposition (M2) und einer Ausstellposition (S2) hin und her stellbar ist, dass der erste Mitnehmer und der zweite Mitnehmer so aufeinander abgestimmt sind, dass der erste Mitnehmer in seiner Mitnahmeposition (M1) vom Anfang bis zum Ende des betreffenden Transportabschnitts vorwärtsbewegbar ist, und gleichzeitig der zweite Mitnehmer seine Ausstellposition (S2) einnehmend vom Ende dieses Transportabschnitts zurück zu dessen Anfang bewegbar ist.

3. Transportvorrichtung nach Anspruch 2, **dadurch gekennzeichnet, dass** der erste Mitnehmer (1a, 1b, 1c, 1d) und der zweite Mitnehmer (2a, 2b, 2c, 2d) so gestaltet sind, dass zwecks Umstellung von der jeweiligen Mitnahmeposition (M1, M2) in die jeweilige Ausstellposition (S1, S2) einander entgegengesetzte Stellbewegungen vorgesehen sind.

4. Transportvorrichtung nach Anspruch 3, **dadurch gekennzeichnet, dass** die Stellrichtung, in welcher der erste Mitnehmer (1a, 1b, 1c, 1d) in seine Mitnahmeposition (M1) hineinbewegbar ist, identisch ist mit jener Stellrichtung, in welcher der zweite Mitnehmer (2a, 2b, 2c, 2d) aus der Mitnahmeposition (M2) heraus in seine Ausstellposition (S2) bewegbar ist.

5. Transportvorrichtung nach Anspruch 4, **dadurch gekennzeichnet, dass** ein gemeinsames Stellmittel (E) für den ersten Mitnehmer (1a, 1b, 1c, 1d) und den zweiten Mitnehmer (2a, 2b, 2c, 2d) vorgesehen ist.

6. Transportvorrichtung nach einem der Ansprüche 2 bis 5, **dadurch gekennzeichnet, dass** die Anordnung der Mitnehmer angepasst ist an eine Form, die als Formkasten (A) ausgeführt ist und Kastenfüße (3) aufweist, welche an der Unterseite des Formkastens nach unten hervorstehen, und dass der zweite Mitnehmer (2a, 2b, 2c, 2d) zwecks dieser Anpassung auf dem Niveau der Kastenfüße angeordnet ist, so dass im Betrieb ein Formkasten immer über den zweiten Mitnehmer hinwegbewegbar ist, wenn dieser seine Ausstellposition (S2) einnimmt.

7. Transportvorrichtung nach einem der Ansprüche 2 bis 6, **dadurch gekennzeichnet, dass** der erste Mitnehmer (1a, 1b, 1c, 1d) und der zweite Mitnehmer (2a, 2b, 2c, 2d) so ausgelegt sind, dass sie in einem Zwischenraum (Z) zweier aufeinanderfolgender Formen oder Formkästen (A) jeweils als Abstandshalter wirken.

8. Transportvorrichtung nach einem der Ansprüche 2 bis 7, **dadurch gekennzeichnet, dass** entweder der erste Mitnehmer (1a, 1b, 1c, 1d) oder der zweite Mitnehmer (2a, 2b, 2c, 2d) in den Zwischenraum (Z) zwischen zwei Formen hineinragt, wobei die Mitnehmer so ausgelegt sind, dass während einer Übergangsphase der erste Mitnehmer noch nicht vollständig aus dem Zwischenraum herausbewegt und der zweite Mitnehmer noch nicht vollständig in den Zwischenraum hineinbewegt ist.

9. Transportvorrichtung nach einem der Ansprüche 7 oder 8, **dadurch gekennzeichnet, dass** der erste Mitnehmer (1a, 1b, 1c, 1d) so angeordnet ist, dass er einen Formkasten (A) im Betrieb oberhalb des Kastenfußes (3) berührt, und dass der erste Mitnehmer und der zweite Mitnehmer (2a, 2b, 2c, 2d) in übereinanderliegenden Ebenen bewegbar sind.

10. Transportvorrichtung nach einem der Ansprüche 2 bis 9, **dadurch gekennzeichnet, dass** der erste Mitnehmer (1a, 1b, 1c, 1d) an einer ersten Schubstange (7) angeordnet ist, dass der zweite Mitnehmer (2a, 2b, 2c, 2d) an einer zur ersten parallel gelagerten zweiten Schubstange (8) angeordnet ist, und dass beide Schubstangen (7, 8) angetrieben sind.

11. Transportvorrichtung nach Anspruch 2 bis 10, **dadurch gekennzeichnet, dass** der Antrieb zum Transport des ersten Mitnehmers (1a, 1b, 1c, 1d) gekoppelt ist mit dem Antrieb zum Transport des zweiten Mitnehmers (2a, 2b, 2c, 2d), so dass der Bewegungsfortschritt des einen Mitnehmers abhängig ist von dem Bewegungsfortschritt des anderen Mitnehmers.

12. Transportvorrichtung nach Anspruch 10 oder 11, **dadurch gekennzeichnet, dass** ein erstes Schubelement vorgesehen ist, mit dem die erste Schubstange (7) antreibbar ist und ein zweites Schubelement vorgesehen ist, mit dem die zweite Schubstange (8) antreibbar ist.

13. Transportvorrichtung nach Anspruch 12, **dadurch gekennzeichnet, dass** das erste Schubelement (5) eine Verzahnung (5a) und das zweite Schubelement (6) eine Verzahnung (6a) aufweist.

14. Transportvorrichtung nach Anspruch 12 und 13, **dadurch gekennzeichnet, dass** das erste Schubelement (5) und das zweite Schubelement (6) über ein gemeinsames Antriebselement (9) gekoppelt sind.

15. Transportvorrichtung nach Anspruch 14, **dadurch gekennzeichnet, dass** das Antriebselement (9) als Zahnrad (9a) ausgebildet ist, das zwischen den Schubelementen (5, 6) angeordnet ist und formschlüssig mit diesen in Eingriff steht.

16. Transportvorrichtung nach einem der Ansprüche 11 bis 15, **dadurch gekennzeichnet, dass** wenigstens der Antrieb zum Transport des ersten Mitnehmers (1a, 1b, 1c, 1d) einen E-Motor oder eine E-Motor-Getriebe-Kombination aufweist.

17. Transportvorrichtung nach einem der Ansprüche 2 bis 16, **dadurch gekennzeichnet, dass** an Stelle eines ersten Mitnehmers (1a, 1b, 1c, 1d) und eines zweiten Mitnehmers (2a, 2b, 2c, 2d) beidseits des Transportabschnitts je ein Mitnehmer vorgesehen ist, so dass ein erstes Mitnehmerpaar beziehungsweise ein zweites Mitnehmerpaar gebildet ist.

18. Transportvorrichtung nach einem der Ansprüche 2 bis 17, **dadurch gekennzeichnet, dass** das Stellmittel (E), mit dem der erste Mitnehmer (1a, 1b, 1c, 1d) von seiner Mitnahmeposition (M1) in seine Ausstellposition (S1) bewegbar ist, einen lineargeführten Querschlitten (12) aufweist.

19. Transportvorrichtung nach Anspruch 18, **dadurch gekennzeichnet, dass** das Stellmittel, mit dem der zweite Mitnehmer von seiner Mitnahmeposition in seine Ausstellposition bewegbar ist, einen lineargeführten Querschlitten aufweist.

20. Transportvorrichtung nach Anspruch 19, **dadurch gekennzeichnet, dass** das Stellmittel für den ersten Mitnehmer (1a, 1b, 1c, 1d) und das Stellmittel für den zweiten Mitnehmer (2a, 2b, 2c, 2d) so integriert sind, dass ein gemeinsamer lineargeführter Querschlitten vorgesehen ist, an dem sowohl der erste Mitnehmer als auch de zweite Mitnehmer angebracht ist.

21. Transportvorrichtung nach Anspruch einem der Ansprüche 18 bis 20, **dadurch gekennzeichnet, dass** ein E-Motor oder eine E-Motor-Getriebe-Kombination vorgesehen ist, um den lineargeführten Querschlitten (12) hin und her zu bewegen zwischen einer Mitnahmeposition und einer Ausstellposition beziehungsweise umgekehrt.

## Claims

1. A transporting apparatus (V) for portion-wise transport of moulds (A) of a confectionery production installation along a transport path including at least one mould of a confectionery production installation, a respective driven first entrainment member (1a, 1b, 1c, 1d) for each of the transport portions (a, b, c, d) of the transport path, wherein there is provided at least one adjusting means (E) so that each first entrainment member is reciprocatingly adjustable perpendicularly to the transport direction of the mould between an entrainment position (M1) in which it engages behind a mould (A) and a disengagement position (S1) in which it can pass the mould (A), wherein the first entrainment member (1a, 1b, 1c, 1d) is moveable with a translatory movement parallel to the plane of the mould (A) lying on the transporting apparatus and perpendicularly to the mould transport direction.

2. A transporting apparatus according to claim 1 **characterised in that** provided at least for a part of the transport portions (a, b, c, d) of the transport path is a respective second entrainment member (2a, 2b, 2c, 2d) which is also reciprocatingly adjustable between an entrainment position (M2) and a disengagement position (S2), the first entrainment member and the second entrainment member are so matched to each other that the first entrainment member in its entrainment position (M1) is moveable forwardly from the beginning to the end of the transport portion in question and at the same time the second entrainment member is moveable assuming its disengagement position (S2) from the end of said transport portion back to the beginning thereof.

3. A transporting apparatus according to claim 2 **characterised in that** the first entrainment member (1a, 1b, 1c, 1d) and the second entrainment member (2a, 2b, 2c, 2d) are of such a configuration that mutually opposite adjusting movements are provided for the purposes of transposition from the respective entrainment position (M1, M2) into the respective disengagement position (S1, S2).

4. A transporting apparatus according to claim 3 **characterised in that** the adjusting direction in which the first entrainment member (1a, 1b, 1c, 1d) is moveable into its entrainment position (M1) is identical to that adjusting direction in which the second entrainment member (2a, 2b, 2c, 2d) is moveable out of the entrainment position (M2) into its disengagement position (S2).

5. A transporting apparatus according to claim 4 **characterised in that** there is provided a common adjusting means (E) for the first entrainment member (1a, 1b, 1c, 1d) and the second entrainment member (2a, 2b, 2c, 2d).

6. A transporting apparatus according to one of claims 2 to 5 **characterised in that** the arrangement of the entrainment members is adapted to a mould which is in the form of a mould box (A) and has box legs (3) projecting downwardly at the underside of the mould box and the second entrainment member (2a, 2b, 2c, 2d) is arranged for the purposes of said adaptation on the level of the box legs so that in operation a mould box is always moveable beyond the second entrainment member when same assumes its disengagement position (S2).

7. A transporting apparatus according to one of claims 2 to 6 **characterised in that** the first entrainment member (1a, 1b, 1c, 1d) and the second entrainment member (2a, 2b, 2c, 2d) are so designed that they respectively act as spacers in an intermediate space (Z) of two successive moulds or mould boxes (A).

8. A transporting apparatus according to one of claims 2 to 7 **characterised in that** either the first entrainment member (1a, 1b, 1c, 1d) or the second entrainment member (2a, 2b, 2c, 2d) projects into the intermediate space (Z) between two moulds, wherein the entrainment members are so designed that during a transitional phase the first entrainment member is not yet moved completely out of the intermediate space and the second entrainment member is not yet moved completely into the intermediate space.

9. A transporting apparatus according to one of claims 7 and 8 **characterised in that** the first entrainment member (1a, 1b, 1c, 1d) is so arranged that it contacts a mould box (A) in operation above the box leg (3) and the first entrainment member and the second entrainment member (2a, 2b, 2c, 2d) are moveable in mutually superposed planes.

10. A transporting apparatus according to one of claims 2 to 9 **characterised in that** the first entrainment member (1a, 1b, 1c, 1d) is arranged at a first thrust rod (7), the second entrainment member (2a, 2b, 2c, 2d) is arranged at a second thrust rod (8) mounted parallel to the first and both thrust rods (7, 8) are driven.

11. A transporting apparatus according to claim 2 to 10 **characterised in that** the drive for transporting the first entrainment member (1a, 1b, 1c, 1d) is coupled to the drive for transporting the second entrainment member (2a, 2b, 2c, 2d) so that the advance in movement of the one entrainment member is dependent on the advance in movement of the other entrainment member.

12. A transporting apparatus according to claim 10 or claim 11 **characterised in that** there is provided a first thrust element with which the first thrust rod (7) is drivable and a second thrust element with which the second thrust rod (8) is drivable.

13. A transporting apparatus according to claim 12 **characterised in that** the first thrust element (5) has a tooth arrangement (5a) and the second thrust element (6) has a tooth arrangement (6a).

14. A transporting apparatus according to claim 12 and claim 13 **characterised in that** the first thrust element (5) and the second thrust element (6) are coupled by way of a common drive element (9).

15. A transporting apparatus according to claim 14 **characterised in that** the drive element (9) is in the form of a gear (9a) which is arranged between the thrust elements (5, 6) and is in positively locking engagement therewith.

16. A transporting apparatus according to one of claims 11 to 15 **characterised in that** at least the drive for transporting the first entrainment member (1a, 1b, 1c, 1d) has an electric motor or an electric motor-transmission combination.

17. A transporting apparatus according to one of claims 2 to 16 **characterised in that** instead of a first entrainment member (1a, 1b, 1c, 1d) and a second entrainment member (2a, 2b, 2c, 2d) on both sides of the transport portion there is provided a respective entrainment member so that a first entrainment member pair and a second entrainment member pair respectively is formed.

18. A transporting apparatus according to one of claims 2 to 17 **characterised in that** the adjusting means (E) with which the first entrainment member (1a, 1b, 1c, 1d) is moveable from its entrainment position (M1) into its disengagement position (S1) has a linearly guided transverse carriage (12).

19. A transporting apparatus according to claim 18 **characterised in that** the adjusting means with which the second entrainment member is moveable from its entrainment position into its disengagement position has a linearly guided transverse carriage.

20. A transporting apparatus according to claim 19 **characterised in that** the adjusting means for the first entrainment member (1a, 1b, 1c, 1d) and the adjusting means for the second entrainment member (2a, 2b, 2c, 2d) are so integrated that there is provided a common linearly guided transverse carriage to which both the first entrainment member and also the second entrainment member are mounted.

21. A transporting apparatus according to one of claims 18 to 20 **characterised in that** there is provided an electric motor or an electric motor-transmission combination to reciprocate the linearly guided transverse carriage (12) between an entrainment position and a disengagement position and vice-versa.

## Revendications

1. Dispositif de transport (V) pour un transport par sections de moules (A) d'une installation de production de confiseries le long d'un trajet de transport, comportant au moins un moule d'une installation de production de confiseries, un premier entraîneur entraîné (1a, 1b, 1c, 1d) pour chacune des sections de transport (a, b, c, d) du trajet de transport, au moins un moyen de commande (E) étant prévu, de sorte que chaque premier entraîneur est réglable, selon un mouvement de va-et-vient perpendiculaire au sens de transport du moule, entre une position d'entraînement (Ml), dans laquelle celui-ci vient en prise par l'arrière avec un moule (A), et une position de retrait (S1), dans laquelle celui-ci peut passer le moule (A), le premier entraîneur (1a, 1b, 1c, 1d) étant déplaçable en translation parallèlement au plan du moule (A) reposant sur le dispositif de transport ainsi que perpendiculairement au sens de transport du moule.

2. Dispositif de transport selon la revendication 1, **caractérisé en ce qu'**au moins pour une partie des sections de transport (a, b, c, d) du trajet de transport est prévu un deuxième entraîneur (2a, 2b, 2c, 2d), qui est également réglable selon un mouvement de va-et-vient entre une position d'entraînement (M2) et une position de retrait (S2), que le premier entraîneur et le deuxième entraîneur sont accordés l'un à l'autre de sorte que le premier entraîneur est, dans sa position d'entraînement (Ml), déplaçable vers l'avant du début à la fin de la section de transport concernée et que simultanément le deuxième entraîneur, prenant sa position de retrait (S2), est déplaçable en arrière de la fin de cette section de transport à son début.

3. Dispositif de transport selon la revendication 2, **caractérisé en ce que** le premier entraîneur (1a, 1b, 1c, 1d) et le deuxième entraîneur (2a, 2b, 2c, 2d) sont configurés de sorte que des mouvements de réglage mutuellement opposés sont prévus en vue du passage de la position d'entraînement (M1, M2) respective à la position de retrait (S1, S2) respective.

4. Dispositif de transport selon la revendication 3, **caractérisé en ce que** le sens de réglage dans lequel le premier entraîneur (1a, 1b, 1c, 1d) est déplaçable à sa position d'entraînement (M1) est identique au sens de réglage dans lequel le deuxième entraîneur (2a, 2b, 2c, 2d) est déplaçable de la position d'entraînement (M2) à sa position de retrait (S2).

5. Dispositif de transport selon la revendication 4, **caractérisé en ce qu'**un moyen de commande commun (E) est prévu pour le premier entraîneur (1a, 1b, 1c, 1d) et le deuxième entraîneur (2a, 2b, 2c, 2d).

6. Dispositif de transport selon l'une des revendications 2 à 5, **caractérisé en ce que** la disposition des entraîneurs est adaptée à un moule qui est réalisé en tant que coffret (A) et présente des pieds de coffret (3) qui dépassent vers le bas au niveau de la face inférieure du coffret et que le deuxième entraîneur (2a, 2b, 2c, 2d) est disposé en vue de cette adaptation au niveau des pieds du coffret de sorte que pendant le fonctionnement, un coffret doit toujours être déplaçable au-delà du deuxième entraîneur quand celui-ci prend sa position de retrait (S2).

7. Dispositif de transport selon l'une des revendications 2 à 6, **caractérisé en ce que** le premier entraîneur (1a, 1b, 1c, 1d) et le deuxième entraîneur (2a, 2b, 2c, 2d) sont conçus de sorte à agir respectivement comme espaceurs dans un espace intermédiaire (Z) entre deux moules ou coffrets successifs (A).

8. Dispositif de transport selon l'une des revendications 2 à 7, **caractérisé en ce que** soit le premier entraîneur (1a, 1b, 1c, 1d), soit le deuxième entraîneur (2a, 2b, 2c, 2d) fait saillie dans l'espace intermédiaire (Z) entre deux moules, les entraîneurs étant conçus de sorte à ce que pendant une phase de transition, le premier entraîneur ne soit pas encore entièrement sorti de l'espace intermédiaire et que le deuxième entraîneur ne soit pas encore entièrement inséré dans l'espace intermédiaire.

9. Dispositif de transport selon l'une des revendications 7 ou 8, **caractérisé en ce que** le premier entraîneur (1a, 1b, 1c, 1d) est disposé de sorte qu'en fonctionnement, il touche un coffret (A) au-dessus du pied du coffret (3) et que le premier entraîneur et le deuxième entraîneur (2a, 2b, 2c, 2d) sont déplaçables dans des plans superposés.

10. Dispositif de transport selon l'une des revendications 2 à 9, **caractérisé en ce que** le premier entraîneur (1a, 1b, 1c, 1d) est disposé sur une première tige de poussée (7), que le deuxième entraîneur (2a, 2b, 2c, 2d) est disposé sur une deuxième tige de poussée (8) montée parallèlement à la première tige de poussée et que les deux tiges de poussée (7, 8) sont entraînées.

11. Dispositif de transport selon les revendications 2 à 10, **caractérisé en ce que** l'entraînement pour le transport du premier entraîneur (1a, 1b, 1c, 1d) est couplé à l'entraînement pour le transport du deuxième entraîneur (2a, 2b, 2c, 2d) de sorte que la progression de déplacement d'un entraîneur dépend de la progression de déplacement de l'autre entraîneur.

12. Dispositif de transport selon la revendication 10 ou 11, **caractérisé en ce qu'**est prévu un premier élément de poussée avec lequel la première tige de poussée (7) peut être entraînée et qu'est prévu un deuxième élément de poussée avec lequel la deuxième tige de poussée (8) peut être entraînée.

13. Dispositif de transport selon la revendication 12, **caractérisé en ce que** le premier élément de poussée (5) présente une denture (5a) et que le deuxième élément de poussée (6) présente une denture (6a).

14. Dispositif de transport selon les revendications 12 et 13, **caractérisé en ce que** le premier élément de poussée (5) et le deuxième élément de poussée (6) sont couplés par l'intermédiaire d'un élément d'entraînement commun (9).

15. Dispositif de transport selon la revendication 14, **caractérisé en ce que** l'élément d'entraînement (9) est conçu comme roue dentée (9a) qui est disposée entre les éléments de poussée (5, 6) et est en prise par complémentarité de forme avec ceux-ci.

16. Dispositif de transport selon l'une des revendications 11 à 15, **caractérisé en ce qu'**au moins l'entraînement pour le transport du premier entraîneur (1a, 1b, 1c, 1d) comporte un moteur électrique ou une combinaison moteur électrique-transmission.

17. Dispositif de transport selon l'une des revendications 2 à 16, **caractérisé en ce qu'**à la place d'un premier entraîneur (1a, 1b, 1c, 1d) et d'un deuxième entraîneur (2a, 2b, 2c, 2d) est prévu de chacun des deux côtés de la section de transport un entraîneur de sorte qu'est constituée une première paire d'entraîneurs respectivement une deuxième paire d'entraîneurs.

18. Dispositif de transport selon l'une des revendications 2 à 17, **caractérisé en ce que** le moyen de commande (E) par lequel le premier entraîneur (1a, 1b, 1c, 1d) peut être déplacé de sa position d'entraînement (M1) à sa position de retrait (S1) comporte un chariot transversal (12) à guidage linéaire.

19. Dispositif de transport selon la revendication 18, **caractérisé en ce que** le moyen de commande par lequel le deuxième entraîneur peut être déplacé de sa position d'entraînement à sa position de retrait comporte un chariot transversal à guidage linéaire.

20. Dispositif de transport selon la revendication 19, **caractérisé en ce que** le moyen de commande pour le premier entraîneur (1a, 1b, 1c, 1d) et le moyen de commande pour le deuxième entraîneur (2a, 2b, 2c, 2d) sont intégrés de sorte qu'est prévu un chariot transversal commun à guidage linéaire sur lequel sont montés tant le premier entraîneur que le deuxième entraîneur.

21. Dispositif de transport selon l'une des revendications 18 à 20, **caractérisé en c**e qu'un moteur électrique ou une combinaison moteur électrique-transmission est prévu pour déplacer le chariot transversal (12) à guidage linéaire selon un mouvement de va-et-vient entre une position d'entraînement et une position de retrait et inversement.
